# EUROPEAN PATENT SPECIFICATION

(11) **EP 1 702 812 B1**
(45) Date of publication and mention of the grant of the patent: **31.03.2010**
(21) Application number: 06003709.0
(22) Date of filing: 23.02.2006
(51) Int. Cl.: B60R 21/0136, B60R 21/34

(54) **Collision detecting apparatus for vehicle**
Vorrichtung zur Erfassung eines Fahrzeugaufpralls
Dispositif de détection de collision pour véhicule

(30) Priority: 15.03.2005 JP 2005074123
(43) Date of publication of application: 20.09.2006
(73) Proprietor: DENSO CORPORATION, Kariya-city, Aichi-pref., 448-8661 (JP); TOYOTA JIDOSHA KABUSHIKI KAISHA, Toyota-city Aichi-pref., 471-8571 (JP); Hitachi Cable, Ltd., Tokyo 100-8166 (JP)
(72) Inventor: Ohtaka, Koji c/o Denso Corporation, Kariya-city Aichi-pref. 448-8661 (JP); Kobayashi, Shigenori c/o Denso Corporation, Kariya-city Aichi-pref. 448-8661 (JP); Iyoda, Motomi c/o Toyota Jidosha Kabushiki Kaisha, Toyota-city Aichi-pref. 471-8571 (JP); Nakagawa, Yukio c/o Toyota Jidosha K. K., Toyota-city Aichi-pref. 471-8571 (JP); Hishida, Yasuyuki c/o Hitachi Cable, Ltd., Chiyoda-ku Tokyo 100-8166 (JP); Kobayashi, Yoji c/o Hitachi Cable, Ltd., Chiyoda-ku Tokyo 100-8166 (JP); Saito, Takahiro c/o Hitachi Cable, Ltd., Chiyoda-ku Tokyo 100-8166 (JP)
(74) Representative: Kuhnen & Wacker

(56) References cited:
- EP-A- 0 943 906
- WO-A-2005/012044
- DE-A1- 10 256 956
- DE-A1- 10 340 243

## Description

The present invention relates to a collision detecting apparatus for vehicles, particularly, relates to an apparatus capable of adequately detecting a collision, such as a collision of a pedestrian, to a bumper.

According to a collision detecting apparatus disclosed in Japanese Unexamined Patent Publications No. JP-A-05-116592 and No. JP-A-07-190732, an optical fiber is disposed to extend around a front face of the vehicle and a decrease of light in the optical fiber due to a collision load of the vehicle is detected by an optical fiber sensor having a light leak property. Further, in JP-A-05-116592, the optical fiber sensor has a cylindrical collision load transmission member having projections therein for partly increasing deflection of the optical fiber by concentrating the external collision load at predetermined positions of the optical fiber. Furthermore, JP-A-05-116592 discloses to cover the optical fiber with an elastic member such as a rubber.
DE 103 40 243 A1 discloses a collision detecting apparatus for detecting a collision e.g. with a pedestrian, comprising a sensor line, which is sensitive for mechanically deformation, a support structure for supporting the sensor line and a measuring unit for providing a collision signal and communicating with the sensor line, wherein the support structure comprises a deformation structure being engaged with the sensor line for a segment varying pressure force transmission.

In a case that such a collision detecting apparatus is arranged between a bumper reinforcement member and a front bumper of the vehicle, it is effective to quickly detect a collision, such as a collision of a pedestrian, at any positions of the front bumper. The optical fiber sensor generally has an optical fiber unit including an optical fiber and a light transmitting and receiving circuit at least. The optical fiber is deformable by the collision load and therefore the amount of light transmitting in the optical fiber changes in accordance with the collision load. The light transmitting and receiving circuit transmits and receives the light into and from the optical fiber.

To improve collision load detecting sensitivity of the optical fiber sensor, the optical fiber unit is required to be effectively deformable in a range of an allowable deformation rate against the collision load input to the optical fiber sensor. Therefore, it is preferable that the optical fiber unit is mechanically supported by a bumper reinforcement member in front of the bumper reinforcement member, thereby to avoid the optical fiber unit from entirely moving backward by the collision load from a front side.

In consideration of a width of the front bumper in a vertical direction and easy deformability of the front bumper, a load transmission plate is disposed between the front bumper and the optical fiber unit, for concentrating the collision load input to the front bumper to the optical fiber unit. In this case, the collision load input to the front bumper is transmitted to the load transmission plate, and then is transmitted to the bumper reinforcement member while deforming the optical fiber unit. Accordingly, the collision load input in the front bumper is effectively applied to the optical fiber unit.

The WO 2006/046771 A1 which is prior art under Article 54(3) EPC shows a collision detection device suitable for a vehicle. The collision detection device includes the load detection member, a mold member, an attachment member and a concave-convex member. The concave-convex member for improving a detection sensitivity of the load detection member has a substantial tape shape, and is made of a polybutylene terephtalat (TPT), for example. The concave-convex member can be positioned at the vehicle rear side of the optical fiber member, and extends along the arrangement path of the optical fiber member. The concave-convex member is provided with multiple protrusion portions, which can be formed at the front surface of the concave-convex member and contact the rear surface of the optical fiber member.

Inventors of the present invention examined output sensitivity of the optical fiber sensor when the optical fiber sensor is arranged between the front bumper and the bumper reinforcement member. The same collision load was applied to the front bumper at plural positions with respect to a longitudinal direction of the front bumper, i.e., a right and left direction of the vehicle. As a result, it was determined that the output sensitivity of the optical fiber sensor against the same collision load was uneven in the longitudinal direction of the front bumper.

The reason of the unevenness of the output sensitivity is considered as follows. Rigidity of the vehicle including the front bumper against the collision load is different depending on the positions in the right and left direction of the vehicle. Therefore, the degree of deformation of the optical fiber is different depending on the input position of the collision load in the right and left direction. According to the examination, particularly, it was found that the output sensitivity of the portions corresponding to at the middle portion and left and right ends of the front bumper was lower than the portions corresponding to portions between the middle portion and the left and right ends of the front bumper.

The unevenness of the output sensitivity of the optical fiber sensor influences on recognition of a collision object, in particular, the collision of a pedestrian. Therefore, it is required to solve the unevenness to put such a collision detecting apparatus into practice.

The present invention is made in view of the foregoing matter, and it is an object of the present invention to provide a collision detecting apparatus for a vehicle, which is capable of decreasing the unevenness of collision detection sensitivity of the optical fiber sensor in the vehicle right and left direction.

According to a first aspect of the present invention, a collision detecting apparatus for a vehicle has an optical fiber sensor including an optical fiber and a light transmitting and receiving circuit, and a collision detecting circuit. The optical fiber is disposed to extend in a right and left direction of the vehicle between a bumper and a bumper reinforcement member of the vehicle. The light transmitting and receiving circuit introduces light into the optical fiber and detects the light from the optical fiber. The collision detecting circuit detects information relating to a collision load based on a change of a signal output from the optical fiber sensor due to a deformation of the optical fiber at a time of a collision. The collision detecting apparatus further has a collision sensitivity compensating member.

The collision sensitivity compensating member is disposed in a load transmission path through which the collision load is transmitted from the bumper to the bumper reinforcement member via the optical fiber. The collision sensitivity compensating member has at least one of a shape and a mechanical property for reducing unevenness of a collision detection sensitivity of the optical fiber sensor resulting from unevenness of collision load transmission to the optical fiber (i.e., a characteristic of change of the collision detection sensitivity in a longitudinal direction of the optical fiber).

The sensitivity (degree of the output signal/collision load) of the optical fiber sensor is different with respect to the right and left direction of the vehicle, due to unevenness of a load transmission characteristic of the load transmission path. The collision sensitivity compensating member has a characteristic opposite to the characteristic of the load transmission path. Because the unevenness of the collision detection sensitivity is compensated by the collision sensitivity compensating member, the collision load is accurately detected. Namely, the collision load to any positions in the bumper with respect to the longitudinal direction of the bumper is accurately detected.

Other objects, features and advantages of the present invention will become more apparent from the following detailed description made with reference to the accompanying drawings, in which like parts are designated by like reference numbers and in which:
Fig. 1 is a schematic transparent plan view of a vehicle having a pedestrian collision sensor and a pedestrian protection apparatus according to a first embodiment of the present invention;
Fig. 2 is an exploded perspective view of the pedestrian collision sensor according to the first embodiment of the present invention;
Fig. 3 is a top view of the pedestrian collision sensor arranged at a front of the vehicle for showing arrangement according to the first embodiment of the present invention;
Fig. 4 is a schematic block diagram of a fiber unit and a circuit unit of the pedestrian collision sensor according to the first embodiment of the present invention;
Fig. 5A is a horizontal cross-sectional view of the fiber unit according to the first embodiment of the present invention;
Fig. 5B is a vertical cross-sectional view of the fiber unit according to the first embodiment of the present invention;
Fig. 6 is a perspective view of a stress concentrating plate according to the first embodiment of the present invention;
Fig. 7 is a graph showing a sensitivity characteristic of the pedestrian collision sensor with respect to a longitudinal direction of a front bumper, before unevenness of the sensitivity is compensated, according to the first embodiment of the present invention;
Fig. 8 is a graph showing a composite sensitivity characteristic of the pedestrian collision sensor, after the unevenness of the sensitivity is compensated with the stress concentrating plate, according to the first embodiment of the present invention; and
Figs. 9A and 9B are a horizontal cross-sectional view of a rung of the stress concentrating plate, according to a second embodiment of the present invention.

Hereafter, preferred embodiments of the present invention will be described with reference to the drawings. In the embodiments, the collision detecting apparatus of the present invention is exemplary employed to a vehicle protection apparatus for detecting a collision of a pedestrian. The present invention is not limited to the following embodiments, but the technical idea of the present invention can be implemented by combinations of conventional structural elements.

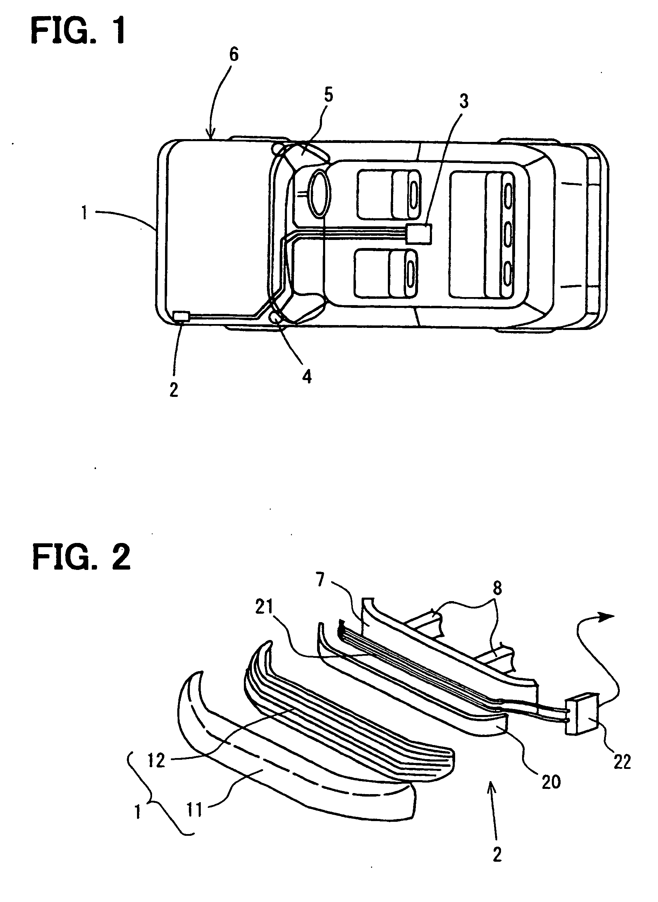

A first embodiment of the present invention will now be described with reference to Figs. 1 through 7.

### (General Structure)

First, a general structure of the vehicle protection apparatus will be described with reference to Fig. 1. As shown in Fig. 1, the vehicle protection apparatus has a collision detecting apparatus (hereafter, referred to as pedestrian collision sensor) 2, a pedestrian protection control unit 3, a pillar air bag expansion device 4, and a pillar air bag 5 for protecting a pedestrian. In Fig. 1, numeral 1 denotes a front bumper, and numeral 6 denotes a vehicle body.

The pedestrian protection control unit 3, the pillar air bag expansion device 4 and the pillar air bag 5 construct an air bag-type pedestrian protection apparatus for protecting a pedestrian, in particular, a head of the pedestrian, who may fall over a bonnet at the time of a collision. In Fig. 1, the pedestrian collision sensor 2 is schematically illustrated.

### (Structure of Pedestrian Collision Sensor 2)

Next, the structure of the pedestrian collision sensor 2 will be described with reference to Figs. 2 to 4. As shown in Fig. 2, the pedestrian collision sensor 2 includes a load transmission plate 20, an optical fiber unit 21, and a circuit unit 22. The load transmission plate 20 and the optical fiber unit 21 are disposed to extend in a right and left direction of the vehicle along a front surface of a bumper reinforcement member 7, between the front bumper 1 and the bumper reinforcement member 7.

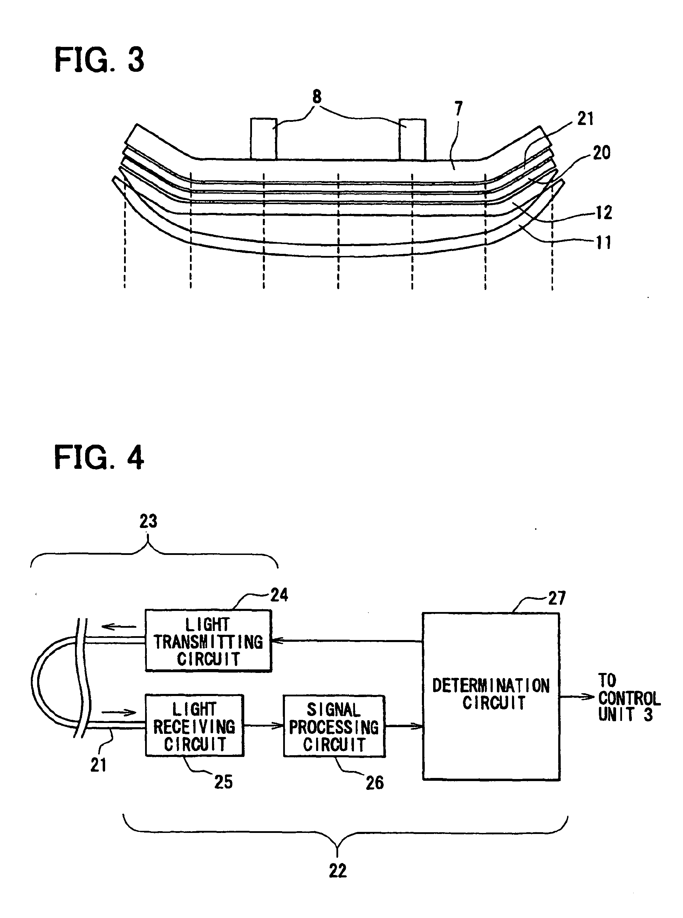

The front bumper 1 is located at a front part of the vehicle body 6. The front bumper 1 is constructed of a bumper cover 11 and a bumper absorber 12 that is located on a rear side of the bumper cover 11. The bumper reinforcement member 7 is fixed at the front ends of a pair of side members 8, as shown in Figs. 2 and 3.

As shown in Fig. 4, the pedestrian collision sensor 2 includes the optical fiber unit 21, a light transmitting circuit 24, a light receiving circuit 25, a signal processing circuit 26, and a determination circuit 27. The light transmitting circuit 24 transmits light into the optical fiber unit 21 and the light receiving circuit 25 detects the light from the optical fiber unit 21. The signal processing circuit 26 converts a signal, which is output from the light receiving circuit 25, into a digital signal after amplification.

The determination circuit 27 is constructed of a microcomputer that processes the digital signal through a predetermined pedestrian discriminate routine, thereby to determine the collision of pedestrian. When it is determined that the vehicle collided with the pedestrian, the determination circuit 27 informs the pedestrian protection control unit 3 of the collision of the pedestrian. The pedestrian protection control unit 3 instructs the pillar air bag expansion device 4 to expand the pillar air bag 5 based on the information. The determination circuit 27 controls the light transmitting circuit 24.

The circuit unit 22 accommodates the light transmitting circuit 24, the light receiving circuit 25, the signal processing circuit 26 and the determination circuit 27 therein. The circuit unit 22 is for example arranged at a front left end of the vehicle. The optical fiber unit 21, the light transmitting circuit 24, and the light receiving circuit 25 construct an optical fiber sensor 23.

The optical fiber unit 21 is disposed in a U-shape along the front surface of the bumper reinforcement member 7. Namely, the optical fiber unit 21 extends from the circuit unit 22, and further extends from a left end to a right end of the bumper reinforcement member 7 along the front surface of the bumper reinforcement member 7. At the right end of the bumper reinforcement member 7, the optical fiber unit 21 turns downward and further extends to the left end of the bumper reinforcement member 7. Then, the optical fiber unit 21 returns to the circuit unit 22. The optical fiber unit 21 has an optical fiber therein. The structure of the optical fiber will be described later.

The light transmitted from the light transmitting circuit 24 passes through the optical fiber in the optical fiber unit 21. Then, the light is photo-converted into a detection signal voltage in the light receiving circuit 25. The detection signal voltage is amplified to a predetermined degree and then converted into the digital signal in the signal processing circuit 26. Then, the signal is sent to the determination circuit 27. Accordingly, an occurrence of the pedestrian collision is determined by the determination circuit 27.

### (Structure of Optical Fiber Unit 21)

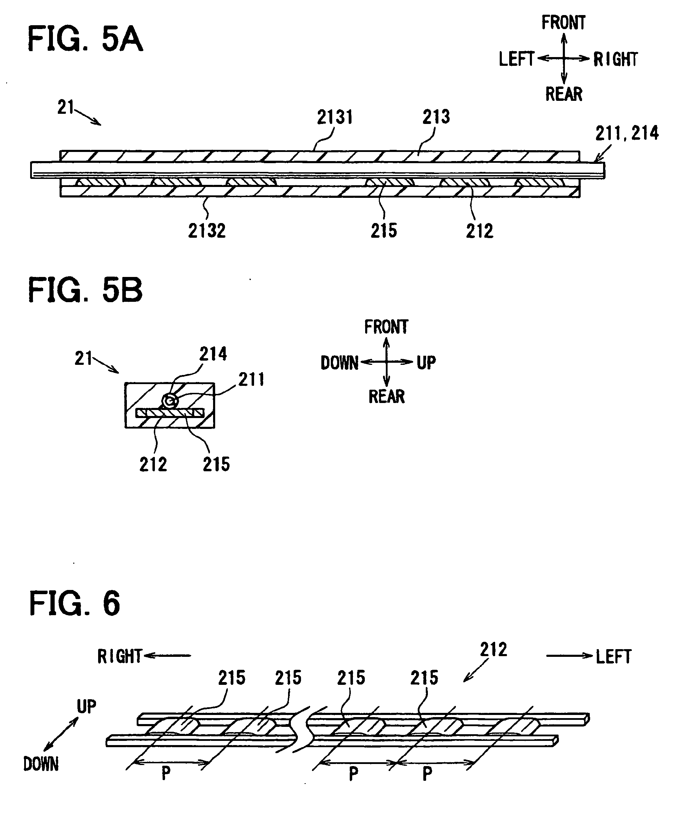

The structure of the optical fiber unit 21 will be described with reference to Figs. 5A and 5B. Fig. 5A shows a horizontal cross-section of the optical fiber unit 21 and Fig. 5B shows a vertical cross-section of the optical fiber unit 21. In Figs. 5A and 5B, front and rear, left and right, and up and down arrows denote directions with respect to the vehicle when illustrated component parts are mounted on the vehicle.

The optical fiber unit 21 has the optical fiber 211, a stress concentrating plate (stress partial concentrating member) 212 and a silicone resin body 213. The optical fiber 211 extends in the right and left direction. The stress concentrating plate 212 is disposed vertically and extends in the right and left direction, closely behind the optical fiber 211. The optical fiber 211 and the stress concentrating plate 212 are embedded in the silicone resin body 213. The silicone resin body 213 has a rectangular-shaped vertical cross-section. Also, the optical fiber 211 is covered with a rubber tube 214.

### (Structure of Stress Concentrating Plate 212)

The stress concentrating plate 212 is formed by punching a thin longitudinal metal plate and has a ladder shape including a plurality of vertical rungs (also referred to as raised portions) 215, as shown in Fig. 6. The stress concentrating plate 212 is disposed such that each of the vertical rungs 215 contacts an outer circumferential surface of the rubber tube 214 of the optical fiber 211 and extends in a vertical direction, as shown in Figs. 5A and 5B.

The optical fiber unit 21 is disposed such that a first wall 2131 of the silicone resin body 213 contacts the rear surface of the load transmission plate 20 and a second wall 2132 of the silicone resin body 213 contacts the front surface of the bumper reinforcement member 7. Alternatively, the optical fiber unit 21 can be disposed such that the first wall 2131 contacts the front surface of the bumper reinforcement member 7 and the second wall 2132 contacts the rear surface of the load transmission plate 20.

In addition, a second stress concentrating plate, which has a shape similar to that of the stress concentrating plate 212, can be added on the opposite side as the stress concentrating plate 212, with respect to the optical fiber 211. In this case, it is preferable that the rungs 215 of the stress concentrating plate 212 and the rungs of the second stress concentrating plate are staggered in the right and left direction. Further, the stress concentrating plate 212 can be formed by molding of a hard resin, instead of the metal plate.

The stress concentrating plate 212 will be described more in detail with reference to Fig. 6. The stress concentrating plate 212 provides a collision sensitivity compensating member. The rungs 215 provides stress concentrating portions.

The rungs 215 are arranged in the right and left direction at a predetermined pitch (interval) P. Here, the pitch P is defined by a predetermined function having a distance from the central position of the stress concentrating plate 212 in the right and left direction as an input variable. The predetermined function will be described later in detail. In the stress concentrating plate 212 shown in Fig. 6, the rungs 215 have the same vertical cross-sectional shape, and therefore, the dimension of each rung 215 in the vehicle front and rear direction is equal.

### (Structure of Load Transmission Plate 20)

Next, the structure of the load transmission plate 20 will be described. In this embodiment, the load transmission plate 20 is formed by resin-molding and located between the bumper absorber 12 and the optical fiber unit 21, as shown in Fig. 3. The load transmission plate 20 is disposed vertically and extends in the vehicle right and left direction, as shown in Fig. 2. The load transmission plate 20 is located adjacent to the front surface of the bumper reinforcement member 7 by a slight distance. Therefore, the load transmission plate 20 can be mechanically suitably supported by the bumper reinforcement member 7.

For example, the right and left ends of the load transmission plate 20 are fixed to the ends of the bumper reinforcement member 7 directly or through elastic members. Further, the load transmission plate 20 can be supported by another way. For example, a guide mechanism can be added between the bumper reinforcement member 7 and the load transmission plate 20 to allow back and forth movement of the load transmission plate 20 with respect to the bumper reinforcement member 7. Alternatively, the load transmission plate 20 can be supported through the front bumper 1. The load transmission plate 20 is provided to transmit a collision load applied to the bumper 1 to the optical fiber 211 after concentrating the collision load therein.

### (Operation of Pedestrian Collision Sensor 2)

Detecting operation of the pedestrian collision sensor 2 will be described hereafter. When the collision load is applied in the front and rear direction, the collision load is partly applied to the optical fiber 211 through the rungs 215 of the stress concentrating plate 212 because the silicone resin body 213 and the rubber tube 214 are easily elastically deformable. Therefore, the optical fiber 211 is bent at positions corresponding to the rungs 215 with positive correlation. Thus, the amount of light passing through the optical fiber 211 decreases in accordance with the degree of the bents.

In a case that the predetermined amount of light is transmitted to one end of the optical fiber 211 from the light transmitting circuit 214, the amount of light received in the light receiving circuit 25 from the opposite end of the optical fiber 211 correlates to the collision load. Accordingly, the output signal of the light receiving circuit 25 changes with the collision load.

The output signal from the light receiving circuit 25 is amplified to the predetermined degree and converted into the digital signal through the signal processing circuit 26. Then, the pedestrian collision is determined in the determination circuit 27. When the pedestrian collision is determined, the pedestrian protection control unit 3 instructs the pillar air bag expansion device 4 to expand the pillar air bag 5.

### (Sensitivity Characteristic of Pedestrian Collision Sensor 2)

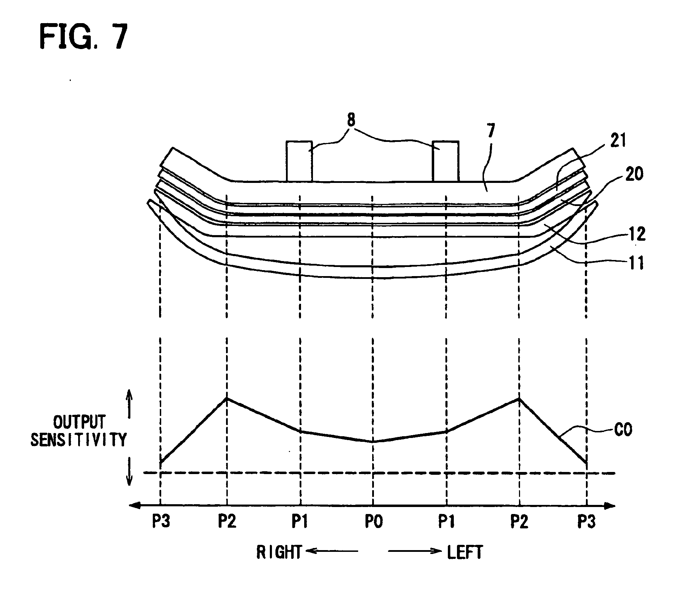

Next, the sensitivity characteristic of the pedestrian collision sensor 2 with respect to the vehicle right and left direction (vehicle width direction) will be described with reference to Fig. 7. In Fig. 7, symbol P0 corresponds to a central position of the bumper reinforcement member 7 in the vehicle right and left direction. Symbol P1 corresponds to a position of the side members 8. Symbol P2 corresponds to a position where a radius of curvature of the bumper reinforcement member 7 is the smallest at the right and left end portions of the bumper reinforcement member 7. Symbol P3 corresponds to the right end and the left end of the bumper reinforcement member 7.

The same collision load is applied to respective portions of the front bumper 1 in the rearward direction. The degree of the output signal of the pedestrian collision sensor 2 is shown in Fig. 7. As shown by a line C0 of Fig. 7, even if the collision load is equal, the output of the pedestrian collision sensor 2 largely changes depending on positions where the collision load is applied, in the right and left direction. The reason of the unevenness of the output sensitivity is considered as follows.

At the position P2, i.e., at the boundary between the middle portion of the bumper reinforcement member 7, which is generally straight in the right and left direction, and the end portions of the bumper reinforcement member 7 from which the bumper reinforcement member 7 extends in a diagonally rearward direction, the arrangement shape of the optical fiber 211 is relatively largely different, as compared to the other portions of the optical fiber 211. That is, the optical fiber 211 is largely curved at the position P2, as compared to other portions. Also, at the position P2, the bumper absorber 12 is thinner than the other portions of the bumper absorber 12.

The thickness of the bumper absorber 12 is also reduced at the positions corresponding to the right and left ends of the bumper reinforcement member 7. However, at the left and right ends, all of the bumper cover 11, the bumper reinforcement member 7, the load transmission plate 20, and the optical fiber unit 21 extend in the diagonally rearward direction. Therefore, it is considered that the deformation of the optical fiber 211 by the collision load is reduced.

Further, the deflection of the bumper reinforcement member 7 is smaller at the position adjacent to the side members 8 than the other portions. Namely, the deflection of the bumper reinforcement member 7 is increased with the distance from the side members 8. Therefore, the deflection of the bumper reinforcement member 7 may also affect the above unevenness of the output sensitivity.

Accordingly, the unevenness of the output sensitivity of the pedestrian collision sensor 2 results from unevenness of a collision load transmission characteristic in a collision load transmission path from the front bumper 1 to the bumper reinforcement member 7. In all cases, such an unevenness of the sensitivity in the right and left direction deteriorates accuracy of determining the collision of the pedestrian.

### (Compensation of Sensitivity)

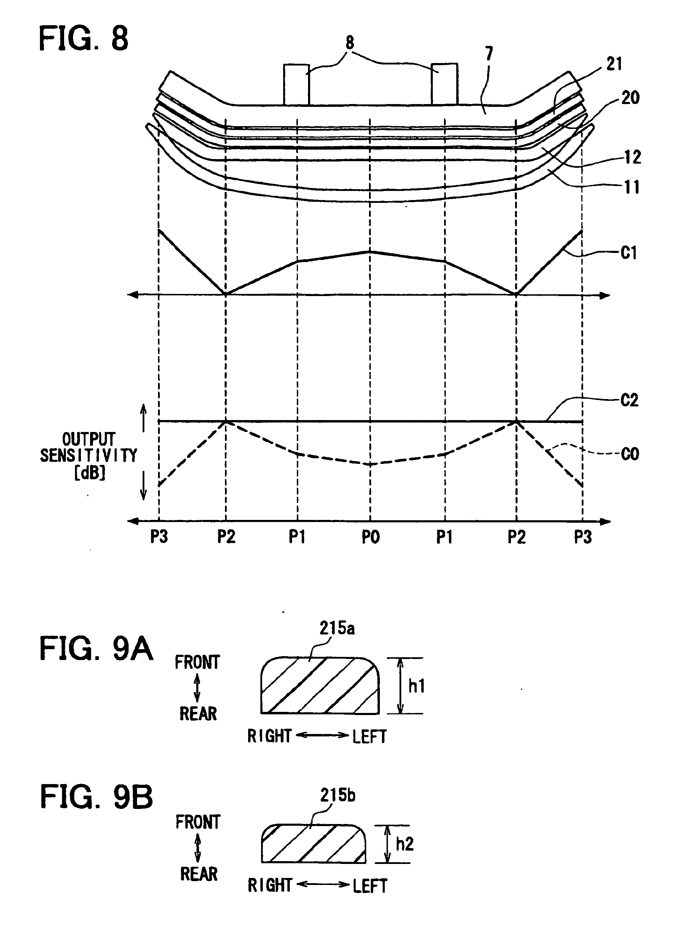

Next, a method of compensating the sensitivity, which is a characteristic part of the present embodiment, will be described with reference to Fig. 8. Here, the pitch (interval) P of the rungs 215 is the smallest at the position P2 and is increased toward the central positions P0 and the right and left ends P3. In Fig. 8, a line C1 represents a sensitivity characteristic of the stress concentrating plate 212 in which the pitch P of the rungs 215 are adjusted in the above manner.

When the collision load is applied to the optical fiber 211 through the stress concentrating plate 212, if the pitch P between the adjacent two rungs 215 is small, the effect for partly bending the optical fiber 211 is negated by the two rungs 215 and hence is decreased. Therefore, the output sensitivity against the predetermined collision load decreases. On the contrary, if the pitch P is large, the above negating effect between the two adjacent rungs 215 is reduced. Therefore, the output sensitivity against the predetermined collision load increases.

Namely, the unevenness of the collision load detection sensitivity C0 shown in Fig. 7 is compensated by changing the pitch P of the rungs 215 of the stress concentrating plate 212. In Fig. 8, a line C2 represents a composite sensitivity characteristic of the optical fiber sensor after the compensation by the rungs 215.

Accordingly, the unevenness of the collision load transmission characteristic of the collision load transmission path through which the collision load is transmitted from the front bumper 1 to the bumper reinforcement member 7 is compensated by adjusting the pitch P of the rungs 215 of the stress concentrating plate 212. Therefore, the pedestrian collision sensor 2 accurately detects the collision load at any parts of the front bumper 1.

Next, a second embodiment of the present invention will be described with reference to Figs. 9A and 9B. In the second embodiment, the dimension of the rungs 215 of the stress concentrating plate 212 shown in Fig. 6 is changed in accordance with the degree of the original sensitivity C0, i.e., the degree of the sensitivity before compensation.

Fig. 9A shows a first rung 215a, which is one of the rungs 215. The first rung 215a has the largest dimension h1 in the front and rear direction of the vehicle. Fig. 9B shows a second rung 215b, which is another one of the rungs 215. The second rung 215b has the smallest dimension h2 in the front and rear direction of the vehicle. The first rung 215a is located at a position corresponding to a portion of the optical fiber 211 where the sensitivity C0 is the lowest, i.e., the position P3 of Fig. 8. The second rung 215b is located at a position corresponding to a portion where the sensitivity C0 is the highest, i.e., the position P2 of Fig. 8. That is, the rung 215 that is located adjacent to a first portion of the optical fiber 211 more projects toward the optical fiber 211 than the rung 215 that is located adjacent to a second portion of the optical fiber 211that has the output sensitivity higher than that of the first portion of the optical fiber 211.

When the collision load is applied to the optical fiber 211 through the stress concentrating plate 212 shown in Fig. 6, if the dimension of the rung 215 is small, the effect for partly bending the optical fiber 211 by the rungs 215 decreases. Therefore, the output sensitivity against the predetermined collision load decreases. On the contrary, if the dimension of the rung 215 is large, the effect for partly bending the optical fiber 211 by the rungs 215 increases. Therefore, the output sensitivity against the predetermined collision load improves.

Therefore, the unevenness of the collision load detection sensitivity C0 is compensated by changing the dimension of the rungs 215 of the stress concentrating plate 212. The sensitivity of the pedestrian collision sensor 2 is compensated by the change of the dimension of the rungs 215, in a manner similar to the composite characteristic C2 of Fig. 8.

Accordingly, the unevenness of the collision load transmission characteristic of the collision load transmission path is compensated by adjusting the dimension of the rungs 215 in the vehicle front and rear direction. Therefore, the pedestrian collision sensor 2 accurately detects the collision load at any portions of the front bumper 1.

The present invention is not limited to the above embodiments, but can modified as follows. In the above embodiments, the output sensitivity of the optical fiber sensor is adjusted by the change of the pitch P or dimension of the rungs (stress partial concentrating portion) 215. The output sensitivity can be adjusted by both of the adjustment of the pitch P and the adjustment of the dimension of the rungs 215. Further, similar effects can be obtained by adjusting the shape of the wall of the rung 215 facing and contacting the optical fiber 211, particularly, the radius of curvature of the wall.

For example, if the inclination or curve of the wall of the rung 215 is large, the optical fiber 211, which contacts the inclined or curve wall through the rubber tube 214, is largely deformed. Therefore, the output sensitivity against the predetermined collision load increases. On the contrary, if the inclination or curve of the wall of the rung 215 is small, the optical fiber 211, which contacts the inclined wall through the rubber tube 214, is relatively slightly deformed. Therefore, the output sensitivity against the predetermined collision load decreases. Namely, the unevenness of the collision load detection sensitivity C0 can be compensated by changing the shape of the walls of the rungs 215.

One of focused points of the invention is that the output sensitivity of the pedestrian collision sensor 2 varies depending on the input position of the collision load because of the shapes of the front bumper 1, the bumper reinforcement member 7, and the optical fiber unit 21. The collision sensitivity compensating member is not limited to the stress concentrating plate 212 having the shape shown in Fig. 6. Another member can be added for compensating the unevenness of the sensitivity, instead of the stress concentrating plate 212. Alternatively, the sensitivity compensating member can be served by a conventional member. For example, the unevenness of the sensitivity can be compensated by adjusting the resiliency of the bumper absorber 12 and the front bumper 1 in the vehicle right and left direction, thereby to provide similar effects.

In the above embodiments, the collision detecting apparatus is disposed on the front bumper. In the above embodiments, the front bumper can be replaced into a rear bumper. Namely, the collision detecting apparatus can be disposed on the rear part of the vehicle to detect a bump from the rear side. Further, the collision object to be detected is not limited to the pedestrian.

Features of the present invention will be summarized as follows. According to a first aspect of the present invention, the collision sensitivity compensating member can be constructed by adding a specific shape or a mechanical property to a conventional member forming the load transmission path. The conventional member is for example a bumper absorber 12 or the load transmission plate 20.

The specific shape for example includes a structure that a part of the collision load, which should be applied to the optical fiber 211 from the load transmission plate 20, is bypassed and directly applied to the bumper reinforcement member 7, and a structure that a collision load, which should be applied to the load transmission plate 20 from the bumper absorber 12, is directly applied to the bumper reinforcement member 7. These structures should be adjusted so that the collision load is applied to the optical fiber 211 with necessary ratios at respective positions in the vehicle right and left direction. Here, the collision load can be a collision load that is applied to any positions of the bumper in a vehicle front and rear direction and in a direction substantially perpendicular to an outer surface of the bumper 1.

According to a second aspect of the present invention, the collision sensitivity compensating member includes the stress partial concentrating member 212 disposed along the optical fiber 211. The stress partial concentrating member 212 has a plurality of stress concentrating portions 215 through which the collision load is transmitted to the optical fiber 211. The plurality of stress concentrating portions 215 is arranged at the predetermined pitch in the right and left direction. The plurality of stress concentrating portions 215 has a shape that reduces the unevenness of the collision detection sensitivity of the optical fiber sensor 2.

Namely the stress partial concentrating member 212, which is employed in this kind of optical fiber sensor for detecting the collision load, functions as the collision sensitivity compensating member. Therefore, the increases of parts, manufacturing steps, and manufacturing costs can be restricted. For example, the stress partial concentrating member 212 can be disposed between the load transmission plate 20 and the optical fiber 211, or between the optical fiber 211 and the bumper reinforcement member 7. Alternatively, the stress partial concentrating member 212 can be integrally formed with the load transmission plate 20 that concentrates the collision load from the bumper absorber 12 therein and transmits it to the optical fiber 211.

According to a third aspect of the present invention, the stress concentrating portion 215 that is located adjacent to the first portion of the optical fiber 211 more projects toward the optical fiber 211 than the stress concentrating portion 215 that is located adjacent to the second portion of the optical fiber 211. The first portion of the optical fiber 211 has the collision detection sensitivity lower than that of the second portion of the optical fiber 211. Accordingly, the sensitivity characteristic of the optical fiber sensor 2 can be adjusted by the stress partial concentrating member 215.

Instead of changing the projecting amount of the stress concentrating portions 215, the sensitivity of the optical fiber sensor 2 can be adjusted by changing the cross-sectional shape of the stress concentrating portions 215. For example, the radius of curvature of the end of the stress concentrating portion 215, which faces the optical fiber 211, can be changed. Further, the sensitivity of the optical fiber sensor 2 can be adjusted by changing both of the cross-sectional shape and the projecting amount of the stress concentrating portions 215.

According to a fourth aspect of the present invention, the pitch P of the stress concentrating portions 215 is adjusted. Namely, the pitch of the stress concentrating portions 215 that are located adjacent to the first portion of the optical fiber 211 is larger than the pitch of the stress concentrating portions 215 that are located adjacent to the second portion of the optical fiber 211. The first portion of the optical fiber 211 has the collision detection sensitivity lower than that of the second portion of the optical fiber 211. Accordingly, the sensitivity characteristic of the stress partial concentrating member 215 is adjusted in the vehicle right and left direction. The sensitivity adjustment can be made with respect to the degree of the collision load applied to the bumper 1 in the front and rear direction of the vehicle and in a direction perpendicular to the outer surface of the bumper 1.

## Claims

1. A collision detecting apparatus (2) for a vehicle, comprising:
an optical fiber sensor (23) including an optical fiber (211) disposed to extend in a right and left direction of the vehicle between a bumper (1) and a bumper reinforcement member (7) of the vehicle, and a light transmitting and receiving circuit (24, 25) for introducing light into the optical fiber (211) and detecting the light from the optical fiber (211);
a collision detecting circuit (27) for detecting information of a collision load based on a change of a signal output from the optical fiber sensor (23) caused by a deformation of the optical fiber (211) at a time of a collision, and
a collision sensitivity compensating member (212) disposed in a load transmission path through which the collision load is transmitted from the bumper (1) to the bumper reinforcement member (7) via the optical fiber (211), wherein the collision sensitivity compensating member (212) has at least one of a shape and a mechanical property for reducing unevenness of collision detection sensitivity of the optical fiber sensor (23) resulting from unevenness of collision load transmission to the optical fiber (211) in the load transmission path with respect to the right and left direction of the vehicle,
where the collision sensitivity compensating member includes a stress partial concentrating member (212) that is disposed to extend along the optical fiber (211),
the stress partial concentrating member (212) has a plurality of stress concentrating portions (215) through which the collision load is transmitted to the optical fiber (211), the plurality of stress concentrating portions (215) is arranged at a predetermined pitch in the right and left direction of the vehicle, and
a pitch of the stress concentrating portions (215) that are located adjacent to a first portion of the optical fiber (211) is larger than a pitch of the stress concentrating portions (215) that are located adjacent to a second portion of the optical fiber (211), the first portion of the optical fiber (211) having the collision detection sensitivity lower than that of the second portion of the optical fiber (211),
**characterised in that** the collision sensitivity compensating member (212) is disposed only on one side of the optical fiber (211).

2. The collision detecting apparatus (2) according to claim 1, wherein
the collision sensitivity compensating member (212) includes a stress partial concentrating member (212) that is disposed to extend along the optical fiber (211),
the stress partial concentrating member (212) has a plurality of stress concentrating portions (215) through which the collision load is transmitted to the optical fiber (211), the plurality of stress concentrating portions (215) is arranged at a predetermined pitch in the right and left direction of the vehicle, and
the plurality of stress concentrating portions (215) has a shape for reducing the unevenness of the collision detection sensitivity of the optical fiber sensor (23).

3. The collision detecting apparatus (2) according to claim 2, wherein
the stress concentrating portion (215a) that is located adjacent to a first portion of the optical fiber (211) more projects toward the optical fiber (211) than the stress concentrating portion (215b) that is located adjacent to a second portion of the optical fiber (211), the first portion of the optical fiber (211) having the collision detection sensitivity lower than that of the second portion of the optical fiber (211).

4. The collision detecting apparatus (2) according to any one of claims 1 through 3, wherein the stress partial concentrating member (212) is arranged on a rear side of the optical fiber (211).

5. The collision detecting apparatus (2) according to any one of claims 1 through 3, wherein the stress partial concentrating member (212) is arranged on a front side of the optical fiber (211).

6. A collision detecting apparatus (2) for a vehicle, comprising:
an optical fiber sensor (23) including an optical fiber (211) disposed to extend in a right and left direction of the vehicle between a bumper (1) and a bumper reinforcement member (7) of the vehicle, and a light transmitting and receiving circuit (24, 25) for introducing light into the optical fiber (211) and detecting the light from the optical fiber (211);
a collision detecting circuit (27) for detecting information of a collision load based on a change of a signal output from the optical fiber sensor (23) caused by a deformation of the optical fiber (211) at a time of a collision, and
a collision sensitivity compensating member (212) disposed in a load transmission path through which the collision load is transmitted from the bumper (1) to the bumper reinforcement member (7) via the optical fiber (211), wherein the collision sensitivity compensating member (212) has at least one of a shape and a mechanical property for reducing unevenness of collision detection sensitivity of the optical fiber sensor (23) resulting from unevenness of collision load transmission to the optical fiber (211) in the load transmission path with respect to the right and left direction of the vehicle,
wherein the collision sensitivity compensating member (212) includes a stress partial concentrating member (212) that is disposed to extend along the optical fiber (211), and
the stress partial concentrating member (212) has a plurality of stress concentrating portions (215) through which the collision load is transmitted to the optical fiber (211),
**characterised in that** the collision sensitivity compensating member (212) is disposed only on one side of the optical fiber (211),
wherein the stress partial concentrating member (212) has a ladder shape including a plurality of rungs as the stress concentrating portions (215), the stress partial concentrating member (212) is arranged such that the rungs (215) contact the optical fiber (211) through an elastic member (214).

7. The collision detecting apparatus (2) according to claim 6, wherein
the plurality of stress concentrating portions (215) is arranged at a predetermined pitch in the right and left direction of the vehicle, and
the plurality of stress concentrating portions (215) has a shape for reducing the unevenness of the collision detection sensitivity of the optical fiber sensor (23).

8. The collision detecting apparatus (2) according to claim 7, wherein
the stress concentrating portion (215a) that is located adjacent to a first portion of the optical fiber (211) more projects toward the optical fiber (211) than the stress concentrating portion (215b) that is located adjacent to a second portion of the optical fiber (211), the first portion of the optical fiber (211) having the collision detection sensitivity lower than that of the second portion of the optical fiber (211).

9. The collision detecting apparatus (2) according to claim 7 or 8, wherein the stress partial concentrating member (212) is arranged on a rear side of the optical fiber (211).

10. The collision detecting apparatus (2) according to any one of claims 7 through 9, wherein the stress partial concentrating member (212) is arranged on a front side of the optical fiber (211).

## Patentansprüche

1. Kollisionserfassungsvorrichtung (2) für ein Fahrzeug, aufweisend:
einen Lichtwellenleitersensor (23), der einen Lichtwellenleiter (211), der so angeordnet ist, dass er sich in einer rechten und einer linken Richtung des Fahrzeugs zwischen einem Stoßfänger (1) und einem Stoßfängerverstärkungselement (7) des Fahrzeugs erstreckt, und eine Lichtübertragungs- und -empfangsschaltung (24, 25) zum Einspeisen von Licht in den Lichtwellenleiter (211) und zum Erfassen des Lichts aus dem Lichtwellenleiter (211) beinhaltet;
eine Kollisionserfassungsschaltung (27) zum Erfassen von Informationen über eine Kollisionslast basierend auf einer Veränderung eines aus dem Lichtwellenleitersensor (23) ausgegeben Signals, die durch eine Verformung des Lichtwellenleiters (211) zu einem Zeitpunkt einer Kollision verursacht wird, und
ein Kollisionsansprechvermögen-Kompensationselement (212), das in einem Lastübertragungsweg angeordnet ist, durch den die Kollisionslast von dem Stoßfänger (1) an das Stoßfängerverstärkungselement (7) über den Lichtwellenleiter (211) übertragen wird, wobei das Kollisionsansprechvermögen-Kompensationselement (212) zumindest entweder eine Form oder eine mechanische Eigenschaft zum Reduzieren einer Ungleichmäßigkeit eines Kollisionserfassungsansprechvermögens des Lichtwellenleitersensors (23) aufweist, die aus einer Ungleichmäßigkeit einer Kollisionslastübertragung an den Lichtwellenleiter (211) in dem Lastübertragungsweg in Bezug auf die rechte und die linke Richtung des Fahrzeugs resultiert,
wobei das Kollisionsansprechvermögen-Kompensationselement ein Teil-Spannungskonzentrationselement (212) beinhaltet, das so angeordnet ist, dass es sich entlang des Lichtwellenleiters (211) erstreckt,
das Teil-Spannungskonzentrationselement (212) eine Mehrzahl von Spannungskonzentrationsbereichen (215) aufweist, durch die die Kollisionslast an den Lichtwellenleiter (211) übertragen wird, wobei die Mehrzahl von Spannungskonzentrationsbereichen (215) in einem vorbestimmten Abstand in der rechten und der linken Richtung des Fahrzeugs angeordnet ist, und
ein Abstand der Spannungskonzentrationsbereiche (215), die benachbart zu einem ersten Bereich des Lichtwellenleiters (211) angeordnet sind, größer ist als ein Abstand der Spannungskonzentrationsbereiche (215), die benachbart zu einem zweiten Bereich des Lichtwellenleiters (211) angeordnet sind, wobei bei dem ersten Bereich des Lichtwellenleiters (211) das Kollisionserfassungsansprechvermögen geringer ist als bei dem zweiten Bereich des Lichtwellenleiters (211),
**dadurch gekennzeichnet, dass** das Kollisionsansprechvermögen-Kompensationselement (212) nur auf einer Seite des Lichtwellenleiters (211) angeordnet ist.

2. Kollisionserfassungsvorrichtung (2) nach Anspruch 1, wobei
das Kollisionsansprechvermögen-Kompensationselement (212) ein Teil-Spannungskonzentrationselement (212) beinhaltet, das so angeordnet ist, dass es sich den Lichtwellenleiter (211) entlang erstreckt,
das Teil-Spannungskonzentrationselement (212) eine Mehrzahl von Spannungskonzentrationsbereichen (215) aufweist, durch die die Kollisionslast an den Lichtwellenleiter (211) übertragen wird, wobei die Mehrzahl der Spannungskonzentrationsbereiche (215) mit einem vorbestimmten Abstand in der rechten und der linken Richtung des Fahrzeugs angeordnet ist, und
die Mehrzahl der Spannungskonzentrationsbereiche (215) eine Form zum Reduzieren der Ungleichmäßigkeit des Kollisionserfassungsansprechvermögens des Lichtwellenleitersensors (23) aufweist.

3. Kollisionserfassungsvorrichtung (2) nach Anspruch 2, wobei
der Spannungskonzentrationsbereich (215a), der benachbart zu einem ersten Bereich des Lichtwellenleiters (211) angeordnet ist, eher in Richtung des Lichtwellenleiters (211) als des Spannungskonzentrationsbereichs (215b) hervorsteht, der benachbart zu einem zweiten Bereich des Lichtwellenleiters (211) angeordnet ist, wobei bei dem ersten Bereich des Lichtwellenleiters (211) das Kollisionserfassungsansprechvermögen geringer ist als bei dem zweiten Bereich des Lichtwellenleiters (211).

4. Kollisionserfassungsvorrichtung (2) nach einem der Ansprüche 1 bis 3, wobei das Teil-Spannungskonzentrationselement (212) auf einer Rückseite des Lichtwellenleiters (211) angeordnet ist.

5. Kollisionserfassungsvorrichtung (2) nach einem der Ansprüche 1 bis 3, wobei das Teil-Spannungskonzentrationselement (212) auf einer Vorderseite des Lichtwellenleiters (211) angeordnet ist.

6. Kollisionserfassungsvorrichtung (2) für ein Fahrzeug, aufweisend:
einen Lichtwellenleitersensor (23), der einen Lichtwellenleiter (211), der so angeordnet ist, dass er sich in einer rechten und linken Richtung des Fahrzeugs zwischen einem Stoßfänger (1) und einem Stoßfängerverstärkungselement (7) des Fahrzeugs erstreckt, und eine Lichtübertragungs- und -empfangsschaltung (24, 25) zum Einspeisen von Licht in den Lichtwellenleiter (211) und zum Erfassen des Lichts aus dem Lichtwellenleiter (211) beinhaltet;
eine Kollisionserfassungsschaltung (27) zum Erfassen von Informationen über eine Kollisionslast basierend auf einer Veränderung eines aus dem Lichtwellenleitersensor (23) ausgegeben Signals, die durch eine Verformung des Lichtwellenleiters (211) zu einem Zeitpunkt einer Kollision verursacht wird, und
ein Kollisionsansprechvermögen-Kompensationselement (212), das in einem Lastübertragungsweg angeordnet ist, durch den die Kollisionslast von dem Stoßfänger (1) an das Stoßfängerverstärkungselement (7) über den Lichtwellenleiter (211) übertragen wird, wobei das Kollisionsansprechvermögen-Kompensationselement (212) zumindest entweder eine Form oder eine mechanische Eigenschaft zum Reduzieren einer Ungleichmäßigkeit eines Kollisionserfassungsansprechvermögens des Lichtwellenleitersensors (23) aufweist, die aus einer Ungleichmäßigkeit einer Kollisionslastübertragung an den Lichtwellenleiter (211) in dem Lastübertragungsweg in Bezug auf die rechte und die linke Richtung des Fahrzeugs resultiert,
wobei das Kollisionsansprechvermögen-Kompensationselement (212) ein Teil-Spannungskonzentrationselement (212) beinhaltet, das so angeordnet ist, dass es sich den Lichtwellenleiter (211) entlang erstreckt, und
das Teil-Spannungskonzentrationselement (212) eine Mehrzahl von Spannungskonzentrationsbereichen (215) aufweist, durch die die Kollisionslast an den Lichtwellenleiter (211) übertragen wird,
**dadurch gekennzeichnet, dass** das Kollisionsansprechvermögen-Kompensationselement (212) nur auf einer Seite des Lichtwellenleiters (211) angeordnet ist,
wobei das Teil-Spannungskonzentrationselement (212) die Form einer Leiter aufweist und eine Mehrzahl von Sprossen als Spannungskonzentrationsbereiche (215) beinhaltet, wobei das Teil-Spannungskonzentrationselement (212) derart angeordnet ist, dass die Sprossen (215) den Lichtwellenleiter (211) durch ein elastisches Element (214) kontaktieren.

7. Kollisionserfassungsvorrichtung (2) nach Anspruch 6, wobei
die Mehrzahl von Spannungskonzentrationsbereichen (215) in einem vorbestimmten Abstand in der rechten und der linken Richtung des Fahrzeugs angeordnet sind, und
die Mehrzahl der Spannungskonzentrationsbereiche (215) eine Form zum Reduzieren der Ungleichmäßigkeit des Kollisionserfassungsansprechvermögens des Lichtwellenleitersensors (23) aufweist.

8. Kollisionserfassungsvorrichtung (2) nach Anspruch 7, wobei
der Spannungskonzentrationsbereich (215a), der benachbart zu einem ersten Bereich des Lichtwellenleiters (211) angeordnet ist, eher in Richtung des Lichtwellenleiters (211) als des Spannungskonzentrationsbereichs (215b) hervorsteht, der benachbart zu einem zweiten Bereich des Lichtwellenleiters (211) angeordnet ist, wobei bei dem ersten Bereich des Lichtwellenleiters (211) das Kollisionserfassungsansprechvermögen geringer ist als bei dem zweiten Bereich des Lichtwellenleiters (211).

9. Kollisionserfassungsvorrichtung (2) nach Anspruch 7 oder 8, wobei das Teil-Spannungskonzentrationselement (212) auf einer Rückseite des Lichtwellenleiters (211) angeordnet ist.

10. Kollisionserfassungsvorrichtung (2) nach einem der Ansprüche 7 bis 9, wobei das Teil-Spannungskonzentrationselement (212) auf einer Vorderseite des Lichtwellenleiters (211) angeordnet ist.

## Revendications

1. Appareil (2) de détection de collision pour un véhicule, comprenant:
un capteur (23) à fibre optique comportant une fibre optique (211) disposée de manière à s'étendre dans les directions droite et gauche du véhicule entre un pare-choc (1) et un élément (7) de renforcement du pare-choc du véhicule, et un circuit (24, 25) d'émission et de réception de lumière destiné à introduire de la lumière dans la fibre optique (211) et à détecter la lumière provenant de la fibre optique (211);
un circuit (27) de détection de collision destiné à détecter des informations d'une charge de collision sur la base d'un changement d'un signal délivré en sortie depuis le capteur (23) à fibre optique que provoque une déformation de la fibre optique (211) au moment de la collision, et
un élément (212) de compensation de la sensibilité à la collision disposé dans un chemin de transmission de charge à travers lequel la charge de collision est transmise depuis le pare-choc (1) à l'élément (7) de renforcement du pare-choc par le biais de la fibre optique (211), où l'élément (212) de compensation de la sensibilité à la collision a au moins l'une d'une forme et d'une propriété mécanique pour réduire l'irrégularité de la sensibilité de détection de la collision du capteur (23) à fibre optique résultant de l'irrégularité de la transmission de la charge de la collision à la fibre optique (211) dans le chemin de transmission de charge par rapport aux directions droite et gauche du véhicule,
où l'élément de compensation de la sensibilité à la collision comporte un élément (212) de concentration partielle de la tension qui est disposé de manière à s'étendre le long de la fibre optique (211),
l'élément (212) de concentration partielle de la tension a une pluralité de parties (215) de concentration de la tension à travers lesquelles la charge de collision est transmise à la fibre optique (211), la pluralité de parties (215) de concentration de la tension sont agencées à un pas prédéterminé dans les directions droite et gauche du véhicule, et
un pas des parties (215) de concentration de la tension qui sont situées de manière adjacente à une première partie de la fibre optique (211) est plus grand qu'un pas des parties (215) de concentration de la tension qui sont situées de manière adjacente à une deuxième partie de la fibre optique (211), la première partie de la fibre optique (211) ayant la sensibilité de détection de la collision inférieure à celle de la deuxième partie de la fibre optique (211),
**caractérisé en ce que** l'élément (212) de compensation de la sensibilité à la collision est disposé uniquement sur un côté de la fibre optique (211).

2. Appareil (2) de détection de collision selon la revendication 1, dans lequel
l'élément (212) de compensation de la sensibilité à la collision comporte un élément (212) de concentration partielle de la tension qui est disposé de manière à s'étendre le long de la fibre optique (211),
l'élément (212) de concentration partielle de la tension a une pluralité de parties (215) de concentration de tension à travers lesquelles la charge de collision est transmise à la fibre optique (211), la pluralité de parties (215) de concentration de la tension sont agencées à un pas prédéterminé dans les directions droite et gauche du véhicule, et
la pluralité de parties (215) de concentration de la tension ont une forme destinée à réduire l'irrégularité de la sensibilité de détection de la collision du capteur (23) à fibre optique.

3. Appareil (2) de détection de collision selon la revendication 2, dans lequel
la partie (215a) de concentration de la tension qui est située de manière adjacente à une première partie de la fibre optique (211) se projette plus vers la fibre optique (211) que la partie (215b) de concentration de la tension qui est située de manière adjacente à une deuxième partie de la fibre optique (211), la première partie de la fibre optique (211) ayant la sensibilité de détection de la collision inférieure à celle de la deuxième partie de la fibre optique (211).

4. Appareil (2) de détection de collision selon l'une quelconque des revendications 1 à 3, dans laquelle l'élément (212) de concentration partielle de la tension est agencé sur un côté arrière de la fibre optique (211).

5. Appareil (2) de détection de collision selon l'une quelconque des revendications 1 à 3, dans laquelle l'élément (212) de concentration partielle de la tension est agencé sur un côté avant de la fibre optique (211).

6. Appareil (2) de détection de collision pour un véhicule, comprenant:
un capteur (23) à fibre optique comportant une fibre optique (211) disposée de manière à s'étendre dans les directions droite et gauche du véhicule entre un pare-choc (1) et un élément (7) de renforcement du pare-choc du véhicule, et un circuit (24, 25) d'émission et de réception de lumière destiné à introduire de la lumière dans la fibre optique (211) et à détecter la lumière provenant de la fibre optique (211);
un circuit (27) de détection de collision pour détecter des informations d'une charge de collision sur la base d'un changement d'un signal délivré en sortie depuis le capteur (23) à fibre optique que provoque une déformation de la fibre optique (211) au moment de la collision, et
un élément (212) de compensation de la sensibilité à la collision disposé dans un chemin de transmission de charge à travers lequel la charge de collision est transmise depuis le pare-choc (1) à l'élément (7) de renforcement du pare-choc par le biais de la fibre optique (211), où l'élément (212) de compensation de la sensibilité à la collision a au moins l'une d'une forme et d'une propriété mécanique pour réduire l'irrégularité de la sensibilité de détection de la collision du capteur (23) à fibre optique résultant de l'irrégularité de la transmission de charge de la collision à la fibre optique (211) dans le chemin de transmission de charge par rapport aux directions droite et gauche du véhicule,
où l'élément (212) de compensation de la sensibilité à la collision comporte un élément (215) de concentration partielle de la tension qui est disposé de manière à s'étendre le long de la fibre optique (211), et
l'élément (212) de concentration partielle de la tension a une pluralité de parties (215) de concentration de la tension à travers lesquelles la charge de collision est transmise à la fibre optique (211),
**caractérisé en ce que** l'élément (212) de compensation de la sensibilité à la collision est disposé uniquement sur un côté de la fibre optique (211),
où l'élément (212) de concentration partielle de la tension a la forme d'une échelle comportant plusieurs échelons comme étant les parties (215) de concentration de la tension, l'élément (212) de concentration partielle de la tension est agencé de sorte que les échelons (215) contactent la fibre optique (211) à travers un élément élastique (214).

7. Appareil (2) de détection de collision selon la revendication 6, dans lequel
la pluralité de parties (215) de concentration de la tension sont agencées à un pas prédéterminé dans les directions droite et gauche du véhicule, et
la pluralité de parties (215) de concentration de la tension ont une forme destinée à réduire l'irrégularité de la sensibilité de détection de la collision du capteur (23) à fibre optique.

8. Appareil (2) de détection de collision selon la revendication 7, dans lequel
la partie (215a) de concentration de la tension qui est située de manière adjacente à une première partie de la fibre optique (211) se projette plus vers la fibre optique (211) que la partie (215b) de concentration de la tension qui est située de manière adjacente à une deuxième partie de la fibre optique (211), la première partie de la fibre optique (211) ayant la sensibilité de détection de la collision inférieure à celle de la deuxième partie de la fibre optique (211).

9. Appareil (2) de détection de collision selon la revendication 7 ou 8, dans lequel l'élément (212) de concentration partielle de la tension est agencé sur un côté arrière de la fibre optique (211).

10. Appareil (2) de détection de collision selon l'une quelconque des revendications 7 à 9, dans lequel l'élément (212) de concentration partielle de la tension est agencé sur un côté avant de la fibre optique (211).
